# EUROPÄISCHE PATENTSCHRIFT

(11) **EP 3 593 082 B1**
(45) Veröffentlichungstag und Bekanntmachung des Hinweises auf die Patenterteilung: **12.07.2023**
(21) Anmeldenummer: 18702497.1
(22) Anmeldetag: 31.01.2018
(51) Int. Cl.: F41H 13/00

(54) **WAFFENSYSTEM MIT WENIGSTENS ZWEI HEL-EFFEKTOREN**
WEAPONS SYSTEM HAVING AT LEAST TWO HEL EFFECTORS
SYSTÈME D'ARME COMPRENANT AU MOINS DEUX EFFECTEURS À LASER HAUTEMENT ÉNERGÉTIQUE

(30) Priorität: 06.03.2017 DE 102017104662
(43) Veröffentlichungstag der Anmeldung: 15.01.2020
(73) Patentinhaber: Rheinmetall Waffe Munition GmbH, 29345 Südheide (DE)
(72) Erfinder: JUNG, Markus, 29358 Eicklingen Niedersachsen (DE); LUDEWIGT, Klaus, 21033 Hamburg (DE)
(74) Vertreter: DREISS Patentanwälte PartG mbB
(86) Internationale Anmeldenummer: PCT/EP2018/052400
(87) Internationale Veröffentlichungsnummer: WO 2018/162148

(56) Entgegenhaltungen:
- WO-A1-2016/024265
- DE-A1-102012 022 039
- DE-U1-202006 010 661
- US-A1- 2005 065 668
- US-A1- 2010 254 154
- US-B1- 7 405 834
- US-B1- 8 575 528

## Beschreibung

Die Erfindung beschäftigt sich mit einem Waffensystem, das aus mindestens zwei Hochenergielaser (HEL-) Effektoren besteht (HEL= High Energy Laser). Die Erfindung betrifft den Systemaufbau eines Waffensystems mit mehreren, zumindest jedoch zwei HEL-Effektoren auf einem Objekt, insbesondere hinsichtlich der Aspekte Systemgewicht, Volumen, Integrationskonzept und Einbauaufwand.

Zum Schutz von Objekten, beweglicher oder stationärer Art, werden unter anderem HEL-Effektoren eingesetzt. Ein HEL-Effektor dient zur Bekämpfung unterschiedlicher Ziele. Mehrere HEL-Effektoren können gleichzeitig auf ein Ziel oder auf mehrere Ziele ausgerichtet werden. Darunter können statische Ziele, wie Minen, IED (Improvised Explosive Devices) etc., aber auch dynamische Ziele, wie beispielsweise Raketen, Artilleriegeschosse oder RAM-Geschosse etc., fallen. Diese Ziele werden dann im Rahmen der Abwehr der Bedrohung zerstört und/oder vernichtet. Insbesondere kleine Ziele (Low, Slow & Small = LSS Ziele) können durch ein derartiges Waffensystem einfacher zerstört oder vernichtet werden. Unter LSS-Ziele fallen auch so genannte UAV (Unmanned Air Vehicle), wie Drohnen, die häufig missbräuchlich zum Transport von Sprengstoffen genutzt werden.

Zu den Schlüsselkomponenten eines HEL-Effektors gehören eine Laserquelle und ein Strahlführungssystem. In dem Strahlführungssystem können die Unterbaugruppen Feinimagingsystems (FIS), Feintrackingsystems (FTS), Teleskop und, falls notwendig, zumindest eine adaptive Optik (AO) untergebracht sein. Bekannte Laserquellen sind Gaslaser, wie CO₂ Laser, sowie Festkörperlaser, wie Diodenlaser, Faserlaser etc.

Derzeitig werden wegen ihrer Vorteile Faserlaser, eine spezielle Form des diodengepumpten Festkörperlasers, als Laserquellen für HEL-Effektoren bevorzugt. Der Hochleistungsfaserlaser umfasst eine oder mehrere Pumpquellen, wie z. B. eine oder mehrere Pumpdiode(n). Beim Faserlaser wird das Pumplicht in eine aktive Faser eingekoppelt und in Laserlicht sehr guter Strahlqualität umgewandelt. Hochleistungsfaserlaser sind entweder als reine Oszillatoren (eine aktive Faser mit einem Resonator) aufgebaut oder als mehrstufige Oszillatoren - Verstärkersysteme sogenannte MOPA (Master Oscillator and Power Amplifier). Beim MOPA Aufbau wird die Leistung eines Oszillators in nachfolgende Verstärkerstufen (aktive Fasern) eingekoppelt und zu höherer Leistung verstärkt. Das Laserlicht wird dann über das Strahlführungssystem auf ein Ziel etc. zur Bekämpfung des Ziels abgestrahlt. Alle optischen Komponenten sind in der Regel mit optischen Fasern (passive Transportfasern) verbunden. Hinzu kommt die Energieversorgungs- und Kühlanlage, welche die Pumpquelle und Master Oszillatoren Power Amplifier der einzelnen Laserquellen mit Strom versorgen und kühlen. Die Energieversorgungs- und Kühlanlage kann Bestandteil der Laserquelle sein.

Aufgrund nichtlinearer Prozesse, die in Fasern bei hoher Leistung auftreten können, müssen die Längen der Transportfasern z. B. zwischen dem MOPA bzw. Oszillator und dem Strahlführungssystem bei hohen Leistungen im Multi-kW-Bereich begrenzt werden. Abhängig von Leistung, Faserparametern, Faseraufbau, Wellenlänge o. ä. kann sich eine maximal mögliche Faserlänge von wenigen Metern ergeben.

Für die Wirkung von HEL-Effektoren ist zudem die Strahlqualität M2 ein entscheidender Faktor. Der Strahlqualitätswert M2 sollte möglichst klein sein, vorzugsweise kleiner als 2.

HEL-Effektoren können, wie andere Waffensysteme, auf einer festen oder beweglichen Plattform lafettiert werden. Als Plattform werden hierbei auch Waffenstationen bezeichnet. Diese Plattformen können ihrerseits auf stationären Objekten (z.B. Häuser, Bunker, Container, etc.) oder beweglichen Objekten (z.B. Fahrzeuge zu Land, Luft und See, Container, etc.) angebracht sein. Bei größeren Objekten werden oftmals mehrere Plattformen verwendet. Auf einem Fahrzeug, insbesondere auf einem maritimen Objekt, wie z.B. einem Schiff, sind die Plattformen häufig an der Steuerbord- und/oder Backbordseite angeordnet. Weitere Plattformen können zudem oder alternativ bug- und/oder heckseitig angebracht sein.

Der Vorteil eines HEL-Effektors gegenüber konventionellen Effektoren (herkömmliche Waffen) liegt unter anderem in einer hohen Treffergenauigkeit und einer verzögerungsfreien Wirkung. Ein Vorhalt muss nicht berücksichtigt werden. Es gibt zudem keine Mündungsblitze und nahezu keine Abschusssignaturen. Ebenso gibt es keine Begrenzung der Einsatzfähigkeit des HEL-Effektors durch einen Magazinvorrat.

Zur Realisierung der geforderten Strahlenqualität eines HEL-Effektors ist anzustreben, auch den MOPA bzw. den Oszillator sehr nahe an der Waffenstation bzw. Plattform unterzubringen.

Die Komponenten des HEL-Effektors sind in der Praxis in einem Compartment (Raum) untergebracht. Dies führt zur Einschränkung bezüglich der Aufbauorte und der realisierbaren maximalen Laserleistung. Insbesondere auf maritimen Objekten wirkt sich eine derartige Einschränkung negativ aus.

Aus der DE 10 2010 051 097 A1 ist ein Lasersystem zur Erzeugung von hohen bzw. kompakten Leistungsdichten am Objekt bekannt. Die Leistung wird auf mehrere Laser bzw. Laserwaffen aufgeteilt und diese am Ziel geometrisch überlagert, sodass in Summe am Ziel eine Gesamtleistungsdichte aller Einzelleistungsdichten erzielt wird. Als Waffe bilden die Einzellaser bzw. Laserwaffen ein Waffensystem zur Bekämpfung eines angreifenden Objekts. Diese Laserwaffen werden über ein Grob- und Feintracking auf das Objekt ausgerichtet. Die Laserwaffen können auf einer sich bewegenden oder einer stationären Plattform angebracht sein. Derartige Laser können nach Aussage des Dokumentes auch zur Materialbearbeitung, beispielsweise in größerer Entfernung, als Bearbeitungslaser genutzt werden.

Die WO 2006/103655 A2 beschreibt einen Laser bzw. eine Laserwaffe, bei welchem eine Lasererzeugungseinheit von einem auf das Ziel zu richtenden Teleskop örtlich getrennt ist. Während das Teleskop sich zusammen mit einer Zielerfassung bzw. Zielverfolgung auf einer beweglichen Plattform eines mobilen Fahrzeugs befindet, ist die Lasererzeugungseinheit fest im mobilen Fahrzeug oder einer separaten Einheit eingebunden. Die funktionale Verbindung zwischen dem Teleskop und der Lasererzeugungseinheit wird durch eine optische Faser hergestellt.

Die DE 33 18 686 A1 offenbart eine Einrichtung zum Ausrichten eines Laserstrahls. Diese Einrichtung ist dafür ausgelegt, einen Hochenergie-Laserstrahl in fester Parallel-Orientierung zur Orientierung von weiteren auf einer Plattform befindlichen Geräten verschwenken zu können. Die Laserquelle ist abseits der Plattform angeordnet. Der Laserstrahl wird über Umlenkspiegel auf optische Elemente übertragen.

Die DE 10 2012 015 074 B3 publiziert eine Strahlrichteinheit für ein Laserwaffensystem, wobei die Strahlrichteinheit einen stationären/teilbeweglichen Anteil und einen vollbeweglichen Anteil aufweist. Am vollbeweglichen Anteil sind eine Zielerfassung bzw. Zielnachführung sowie ein Teleskop und ein Ausgangsstufenelement angebracht. Die Strahlrichteinheit umfasst zumindest eine Lasererzeugungseinheit, die zumindest eine Seed-Lasereinheit und zumindest eine Pumplasereinheit aufweist. Die Seed-Lasereinheit als auch die Pumplasereinheit sind unter Verwendung jeweils einer optischen Faser mit dem Ausgangsstufenelement (z.B. Verstärker) verbunden. Bei mehreren Pumplasereinheiten werden die einzelnen Laserleistungen in einem Strahlkoppler zusammengeführt und ebenfalls über eine optische Faser dem Ausgangsstufenelement zugeführt. Dadurch wird erreicht, dass die Masse am vollbeweglichen Teil reduziert werden kann. Das Gesamtgewicht auf dem Objekt ändert sich hingegen nicht.

Die DE 10 2012 022 039 A1 offenbart eine Laserbestrahlungseinheit zum Bestrahlen eines Zielobjekts mit Hochlaserstrahlung, umfassen mehrere starr miteinander verbundenen Laserstrahlmodulen, die dazu ausgeführt sind, Laserstrahlung abzugeben. Eine Richteinheit dient zum Ausrichten der Laserstrahlmodule auf das Zielobjekt. Jeder der Laserstrahlmodule umfasst eine Optik, die dazu ausgeführt ist, Laserstrahlung auf ein Zielpunkt des Zielobjekts auszurichten. Die jeweils erforderliche Laserleistung lässt zu einfach durch die Anzahl der Laserstrahlmodule anpassen. Das Laserlicht für die Hochleistungslaser-Strahlenmodule und das Zielmarkierungslaser-Strahlmodul wird in einem Lasermodul erzeugt, das eine Mehrzahl von Faserleitern aufnimmt, die mit den Strahlenmodulen verbunden sind. Vorgesehen ist, dass die Laserbestrahlungseinheit mehrere Laserquellen umfasst, die dazu ausgeführt sind, Laserstrahlung zu erzeugen und die jeweils mit einer optischen Faser mit einem Laserstrahlmodul verbunden sind. Die Richteinheit kann dabei die Laserstrahlmodule unabhängig von der Laserquelle bewegen. Die US 5,208,699 offenbart ein Lasersystem mit einer zentralen Laserquelle zum Erzeugen von Laserstrahlung, wobei zum Verstärken der Laserstrahlung bei der zentralen Laserquelle zentral ein Oszillator und ein Verstärker vorgesehen ist. Die Erfindung stellt sich die Aufgabe, bei Nutzung von zwei oder mehreren HEL-Effektoren den Systemaufbau zu optimieren hinsichtlich der erforderlichen Masse, des Raumbedarfs und des Integrationsaufwands.

Gelöst wird die Aufgabe durch die Merkmale des Patentanspruchs 1. Vorteilhafte Ausführungen werden in den Unteransprüchen aufgezeigt.

Der Erfindung liegt die Idee zugrunde, nicht jedem HEL-Effektor alle Schlüsselkomponenten eines HEL-Effektors zuzuordnen. So soll nicht jeder HEL-Effektor z.B. eine eigene, komplette Laserquelle, bzw. Teile davon, aufweisen. Vielmehr ist vorgesehen, dass diese Schlüsselkomponente, bzw. Teile davon, von mehreren HEL-Effektoren gemeinsam nutzbar ist. Diese Schlüsselkomponente, bzw. Teile davon, wird als gemeinsam nutzbare Komponente definiert. In einer optimalen Ausführung braucht ein HEL-Effektor nur noch über eine eigene Schlüsselkomponente, nämlich über wenigstens ein Strahlführungssystem als individuelle Komponente, verfügen. In den individuellen Strahlführungssystemen können die Unterbaugruppen Feinimagingsystems (FIS), Feintrackingsystems (FTS), Teleskop und, falls notwendig, zumindest eine adaptive Optik (AO) untergebracht sein. Die gemeinsam nutzbare Schlüsselkomponente, bzw. Teile davon, wird ihrerseits so mit der/den individuellen Schlüsselkomponente(n) des HEL-Effektors verbunden, dass die Funktion wenigstens eines HEL-Effektors gewährleistet wird.

Die vorliegende Erfindung schlägt daher vor, bei einem Waffensystem mit wenigstens zwei HEL-Effektoren, die wenigstens ein Strahlführungssystem aufweisen, z.B. nur eine Laserquelle bzw. eine Pumpquelle für die wenigstens zwei HEL-Effektoren zu verwenden. Die Strahlführungssysteme der HEL-Effektoren greifen auf die gemeinsame Laserquelle bzw. gemeinsame Pumpquelle zu. Eine optische Verknüpfung der gemeinsamen Laserquelle bzw. der gemeinsamen Pumpquelle mit den Strahlführungen, direkt oder indirekt, erfolgt mittels wenigstens einer optische Schalteinheit, sodass zumindest ein funktionsfähiger, vollständiger HEL-Effektor im Waffensystem zur Bedrohungsabwehr bereitgestellt wird.

In Konsequenz dieser Idee können bei mehreren HEL-Effektoren auf einem Objekt einzelne Schlüsselkomponenten, bzw. Teile davon, eingespart werden. Mit der Einsparung von einzelnen Schlüsselkomponenten, bzw. Teilen davon, kann das Gesamtgewicht, der Platzbedarf und der Integrationsaufwand der HEL-Effektoren auf dem Objekt reduziert werden.

Dieser Idee liegt die Kenntnis zugrunde, dass durch die Genauigkeit, Präzision und die schnelle Ausrichtung heutiger HEL-Effektoren eine Bekämpfung eines Ziels oder auch mehrerer Ziele bereits durch einen einzigen HEL-Effektor möglich ist. Die Notwendigkeit, dass alle auf dem Objekt angebrachten HEL-Effektoren zeitgleich in Funktionsbereitschaft sein müssen, besteht nicht.

In einer ersten, technisch machbaren Ausführung bestehen mehrere HEL-Effektoren, zumindest zwei, aus einer gemeinsam nutzbaren Schlüsselkomponente, der Laserquelle, und einer individuellen Schlüsselkomponente, dem eigenen Strahlführungssystem. Die Laserquelle umfasst hierbei zumindest eine Pumpquelle mit wenigstens einer Pumpdiode, bevorzugt mehreren, sowie wenigstens einen Master Oscillator and Power Amplifier (MOPA), alternativ wenigstens einen Oszillator. Der Laserquelle zugeordnet werden kann auch eine Energieversorgungs- und Kühlanlage.

Die zentrale Laserquelle bildet die Schlüsselkomponente aller HEL-Effektoren. Die optischen Verbindungen werden mittels optischen Fasern bzw. Freistrahl realisiert. Die von mehreren HEL-Effektoren nutzbare Laserquelle kann ihrerseits zentral auf dem Objekt platziert werden. Zu beachten ist, dass eine notwendige Strahlenqualität bei dem Strahltransport erhalten bleibt. Eine optische Verknüpfung der zentralen Laserquelle mit den einzelnen Strahlführungssystemen erfolgt über wenigstens eine optische Schalteinheit. Die optische Schalteinheit kann ein optischer Schalter oder eine optische Schaltweiche sein. Eine optische Schaltweiche zeichnet sich dadurch aus, dass diese schnell, winkelgenau und immer zuverlässig schaltet. Die optische Schalteinheit sollte des Weiteren dazu ausgelegt sein, das Laserlicht auf mindestens zwei Ausgänge der optischen Schalteinheit aufteilen zu können, auch gleichzeitig. Die Aufteilung sollte stufenlos oder in mehreren Stufen machbar sein. Es sind dabei mindestens zwei Stufen vorzusehen, z.B. über Endanschläge. Das Laserlicht sollte von 0 bis 100% aufgeteilt werden können.

Der einzelne HEL-Effektor besteht somit in einer ersten Ausführung aus einer gemeinsam nutzbaren Laserquelle und wenigstens einem eigenen Strahlführungssystem. Dadurch wird die Möglichkeit geschaffen, dass nur noch das individuelle Strahlführungssystem des jeweiligen HEL-Effektors auf einer Plattform, wie bereits definiert, lafettiert werden braucht. Diese mögliche Ausführung wird zwar nicht favorisiert, ist technisch jedoch realisierbar.

In Weiterführung der Erfindung wird in einer weiteren, bevorzugten Ausführung nicht die gesamte Laserquelle, d.h., mit allen Komponenten, wie Pumpquelle, MOPA bzw. Oszillator ggf.

Energieversorgungs- und Kühlanlage, zentral angeordnet. Es kann ausreichend sein, wenn nur die Pumpquelle(n) der Laserquelle zentralisiert wird/werden. Neben dem eigenen Strahlführungssystem wird jedem HEL-Effektor ein eigener Master Oszillator + Verstärker (MOPA) bzw. Oszillator zugeordnet. Dieser MOPA bzw. Oszillator kann dann in der Nähe, auch in direkter Nähe, zur jeweiligen Plattform, aber auch auf der jeweiligen Plattform angebracht werden. Jeder Verstärker der MOPA bzw. jeder Oszillator ist mit der Pumpquelle optisch verbindbar. Der Master Oszillator (MO) kann in Abhängigkeit von der Faserlänge im Bereich der Pumpquelle oder des Verstärkers untergebracht werden. Es können auch weitere Verstärker vor den individuellen Strahlführungssystemen der HEL- Effektoren eingebunden sein.

Die optische Schalteinheit dient ihrerseits dazu, die Pumpleistung der Pumpquelle auf mindestens zwei Ausgänge der optischen Schalteinheit aufzuteilen. Bei mehreren Pumpquellen können diese über die optische Schalteinheit ebenfalls auf wenigstens zwei Ausgänge der optischen Schalteinheit verteilt werden. Die Ausgänge der optischen Schalteinheit(en) für die Pumpleistung sind ihrerseits mit wenigstens einem Eingang der Verstärker (PA) der HEL-Effektoren, bevorzugt mittels optischer Fasern, verbunden. Die Aufteilung der Pumpleistung sollte stufenlos oder in mehreren Stufen machbar sein. Es sind dabei mindestens zwei Stufen vorzusehen, z.B. über Endanschläge. Der Pumpleistung sollte von 0 bis 100% aufgeteilt werden können. Vorgesehen ist des Weiteren, dass die Aufteilung bei mehreren Ausgängen der optischen Schalteinheit gleichzeitig möglich ist. Eine gleichzeitige Aufteilung der Pumpleistung auf die Verstärker (PA) der HEL-Effektoren ermöglicht, zeitgleich mehrere HEL-Effektoren in Funktion bringen zu können.

Alternativ kann jede Pumpquelle auf eine eigene optische Schalteinheit geführt und von dieser auf mindestens zwei Ausgänge aufgeteilt werden. Des Weiteren kann mit Hilfe mehrerer optischer Schalteinheiten, die wenigstens zwei Ausgänge haben, eine kaskadenartige Anordnung von 2ⁿ - Ausgängen realisiert werden.

Der einzelne HEL-Effektor besteht in dieser zweiten Ausführung aus einer gemeinsam nutzbaren, zentralen Pumpquelle, sowie aus wenigstens einem eigenen MOPA bzw. wenigstens einem eigenen Oszillator und wenigstens einem eigenen Strahlführungssystem. Der jeweilige MOPA bzw. der jeweilige Oszillator der HEL-Effektoren kann in der Nähe des Strahlführungssystems des HEL-Effektors untergebracht werden. Eine direkte Anbindung auf der Plattform zusammen mit dem Strahlführungssystem ist ebenfalls denkbar.

Die optische Verbindung zwischen Pumpquelle und den Verstärkern der MOPA bzw. den Oszillatoren erfolgt bevorzugt über optische Fasern. Eine Freistrahlvariante ist ebenfalls möglich.

Die optische Verknüpfung der zentralen Pumpquelle mit den Oszillatoren bzw. den Verstärkern der MOPA erfolgt auch hier über wenigstens eine optische Schalteinheit. Die optische Schalteinheit kann hier ebenfalls ein optischer Schalter oder eine optische Schaltweiche sein. Durch die optische Schalteinheit kann sich in dieser Ausführung z.B. eine Wirklinie ergeben: Pumpeinheit - Faser (optische Strecke) - optische Schalteinheit - Faser (optische Strecke) - Oszillator bzw. Verstärker. Bei Nutzung von mehreren Oszillatoren sind die Ausgänge der optischen Schalteinheit(en) mit einem Pumpeingang (aktives Medium) des Oszillators, bevorzugt mittels optischen Fasern, verbunden. So kann auch bei einer geringen Strahlqualität der Pumpdioden trotz der hohen Leistung eine optische Verbindung (Faser, Freistrahl) zwischen dem wenigstens einen optischen Schalter und den Verstärkern bzw. Oszillatoren mit einem deutlich größeren Abstand als wenige Meter realisiert werden. Abwandlungen, bei denen eine optische Strecke fehlt, sind aber auch bei dieser Ausführung denkbar.

Eine weitere Möglichkeit besteht darin, anstelle der vielen einzelnen Master Oszillatoren einen gemeinsam nutzbaren Master Oszillator (MO) getrennt von der Pumpquelle vorzusehen. Die optischen Verbindungen zwischen Pumpquelle und den Verstärkern der HEL-Effektoren erfolgt entsprechend der zweiten Ausführung. Der geschaffene zentrale Master Oszillator kann sich in der Nähe der Pumpquelle befinden, was die Energieversorgung und Kühlung des Master Oszillators vereinfacht. Der Ausgang des Master Oszillators kann über wenigstens eine weitere optische Schalteinheit auf zumindest einen Eingang der Verstärker (PA) der HEL-Effektoren geschaltet werden.

Aufgrund des geringen Gewichts des einzelnen Verstärkers kann dieser mit dem Strahlführungssystem direkt an der Plattform lafettiert werden. Das ermöglicht die Einkopplung einer guten Strahlqualität des Verstärkers bei hoher Leistung in das Strahlführungssystem. Je nach Ausgangsleistung des Master-Oszillators ergeben sich für die optische Verbindung, z.B. optische Faser, zwischen Master-Oszillator und den Verstärkern unterschiedliche zulässige Faserlängen.

Der einzelne HEL-Effektor besteht in dieser dritten, ebenfalls favorisierten Ausführung aus einer gemeinsam nutzbaren zentralen Pumpquelle, einem gemeinsam nutzbaren Master Oszillator (MO), eigenen Verstärkern (PA) sowie eigenen Strahlführungssystemen.

Durch eine zusätzliche Steuerung kann zudem festgelegt werden, welche der zuzuschaltenden MOPA, Verstärker (PA) bzw. Oszillator(en) mit welchem prozentualen Anteil an Laser- bzw. Pumpleistung versorgt werden sollen. So kann für jeden HEL-Effektor die Strahlleistung der Laser- bzw. Pumpquelle eingestellt und/oder variiert werden. Dieser prozentuale Anteil ist mittels der optischen Schalteinheit(en) steuerbar.

Die optischen Schalteinheiten können ihrerseits von der zentralen Laserquelle bzw. der zentralen Pumpquelle und ggf. vom zentralen Master Oszillator (MO) beabstandet sein. Aufgrund der geringen Strahlqualität der Pumpdioden kann hier eine optische Verbindung (Faser, Freistrahl) insbesondere zwischen den optischen Schaltereinheiten und den Verstärkern bzw. Oszillatoren mit einem deutlich größeren Abstand als wenige Meter realisiert werden. Bei schlechterer Strahlqualität erfolgt der Strahltransport in Fasern mit größerem Kerndurchmesser bei verringerter Intensität, sodass nichtlineare Prozesse vermindert einsetzen.

Über die optische Schalteinheit ist auch eine Trennung der Laserquelle bzw. der Pumpquelle von den anderen Komponenten der HEL-Effektoren möglich. Die HEL-Effektoren lassen sich über die optische Schalteinheit(en) in einen Sicherheitszustand überführen.

Selbstverständlich können auch weitere zentrale Laserquellen, Pumpquellen und weitere zentrale Master Oszillatoren etc. als gemeinsam nutzbare Schlüsselkomponenten vorgesehen werden. Das ermöglicht die Schaffung eines redundanten Systems. Auch können mehrere HEL-Effektoren zu Gruppen zusammengefasst werden, die dann parallel betrieben werden können.

Die Nutzung einer Laserquelle, alternativ einer Pumpquelle etc., für mehrere HEL-Effektoren ermöglicht, das Gesamtgewicht auf dem Objekt zu reduzieren. Die dezentrale Anordnung der gemeinsamen, zentralen Laserquelle bzw. Pumpquelle etc. für die mehreren HEL-Effektoren schafft zudem die Möglichkeit, diese vor Umwelteinflüssen geschützt auf bzw. im Objekt unterzubringen.

Neben der Gewichtseinsparung ergibt sich durch die vorliegende Erfindung ein weiterer Vorteil. Die Laserquelle, Pumpquelle ggf. der zentrale Master Oszillator Power Amplifier (MOPA) oder der zentrale Master Oszillator (MO) bzw. zentrale Oszillator können nunmehr bevorzugt innerhalb des Objektes, z.B. im Rumpf eines Schiffes oder Fahrzeuges, untergebracht werden. Diese Komponenten sind nicht mehr den Umweltanforderungen auf dem Objekt ausgesetzt. Durch eine örtliche Trennung ergibt sich zudem ein weiterer Vorteil. So können die einzelnen Komponenten in kleineren Räumen auf dem Objekt, beispielsweise in Nischen, eingebaut werden.

Gerade auf einem Schiff ist die Einsparung von Komponenten ein riesiger Gewinn. Ein derartiges Abspecken von Komponenten macht den Einsatz von HEL-Effektoren auf derartigen Objekten möglich und auch finanziell praktikabel. Die HEL-Effektoren können kostengünstiger angeboten werden. Auch sind bereits vorhandene Plattformen, wie von herkömmlichen Effektoren, nutzbar. So kann z.B. die Plattform eines Marineleichtgeschützes etc., zur Aufnahme einzelner Komponenten der HEL-Effektoren dienen. Diese Vorteile ergeben sich aber auch für andere Fahrzeuge zu Land, zu Wasser und in der Luft und können auf weitere Objekte übertragen werden.

Die Wirkungsweise ist verallgemeinert wie folgt:
Wird ein Ziel bzw. eine Bedrohung detektiert, wird, beispielsweise durch ein Waffeneinsatzsystem, ermittelt, welches bzw. welche der auf dem Objekt befindlichen Strahlführungssystem(e) der HEL-Effektorten die bestmöglichste Abwehr oder Neutralisierung der Bedrohung schnellstmöglich bewirken kann. Derartige Verfahren sind dem Fachmann bekannt. Das Waffeneinsatzsystem entscheidet dann, welches bzw. welche Strahlführungssystem(e) eingesetzt werden. Alternativ kann dieses auch eine Bedienperson veranlassen. Aufgrund dieser Entscheidung erfolgt ein optisches Verknüpfen des/der ausgewählten Strahlführungssystems(e), wie bereits beschrieben. Das Schalten der optischen Schalteinheit(en) kann pneumatisch, hydraulisch, als auch elektrisch oder elektrooptisch erfolgen, wobei andere Möglichkeiten nicht ausgeschlossen sind. Das Schalten wird durch die zentrale Steuereinheit gesteuert.

Die Erfindung soll anhand eines Ausführungsbeispiels mit Zeichnung näher erläutert werden. Es zeigt:
- Fig. 1: eine erste Ausführungsform in einer schematischen Blockbilddarstellung, wobei eine Laserquelle für wenigstens zwei oder mehrere HEL-Effektoren nutzbar ist,
- Fig. 2: eine zweite Ausführungsform in einer schematischen Blockbilddarstellung, wobei zumindest eine Pumpquelle für wenigstens zwei oder mehrere HEL-Effektoren genutzt werden kann,
- Fig. 3: eine dritte Ausführungsform ähnlich Fig.2,
- Fig. 4: eine weitere Ausführungsform der erfinderischen Idee in einer schematischen Blockbilddarstellung
- Fig. 5: eine skizzenhafte Darstellung eins Kaskadenaufbaus für eine Aufteilung der Laserleistung.

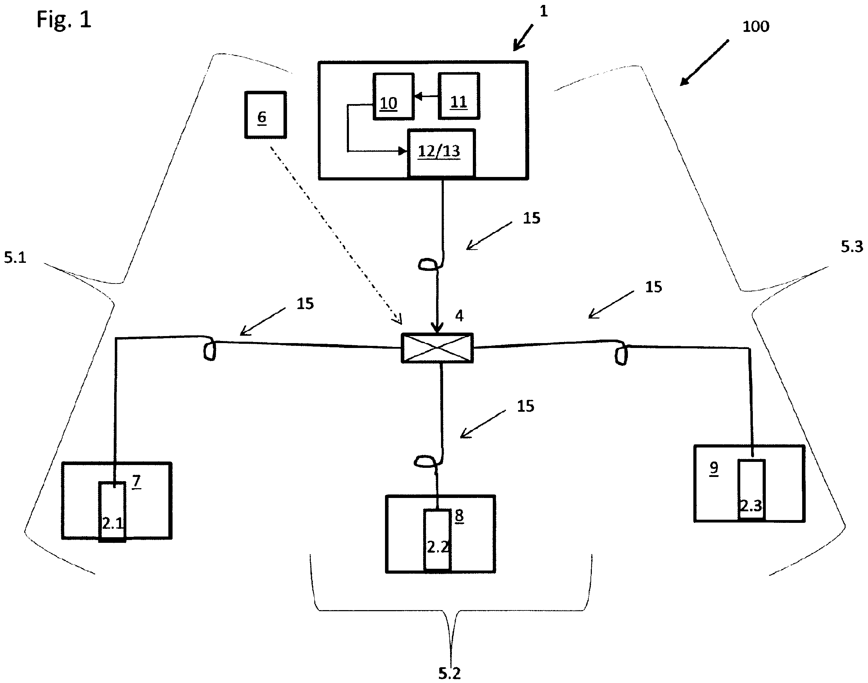

In Fig. 1 dargestellt ist eine Laserquelle 1 sowie wenigstens zwei Strahlführungssysteme 2.1, 2.2, 2.3 als Schlüsselkomponenten mehrerer, wenigstens zweier HEL-Effektoren 5.1, 5.2, 5.3.

Als Strahlführungssystem 2.1, 2.2, 2.3 wird ein Abbildungssystem definiert. Dieses kann gemäß der DE 10 2010 051 097 A1 aufgebaut sein. Strahlführungssysteme mit einem anderen Aufbau sind ebenfalls denkbar. Die Laserquelle 1 beinhaltet zumindest eine Pumpquelle 10, die von wenigstens einer Pumpdiode gebildet wird. Die Pumpquelle 10 kann von einer Energieversorgungs- und Kühlanlage 11 mit Strom versorgt und gekühlt werden. Diese Energieversorgungs- und Kühlanlage 11 kann Bestandteil der Laserquelle 1 sein. Zur Laserquelle 1 zugehörig ist ein Master Oszillator Power Amplifier (MOPA) 12 (z.B. Seedlaser + Verstärker), der in dieser platziert sein kann. Alternativ kann auch ein Oszillator (Single Resonator) 13 verwendet werden.

Die einzelnen Strahlführungssysteme 2.1, 2.2, 2.3 der HEL-Effektoren 5.1, 5.2, 5.3 sind über eine optische Schalteinheit 4 mit der Laserquelle 1 verschaltbar. Die HEL-Effektoren 5.1, 5.2, 5.3 verfügen somit über eine gemeinsame Laserquelle 1 und individuelle Strahlführungssysteme 2.1, 2.2, 2.3 als ihre Schlüsselkomponenten.

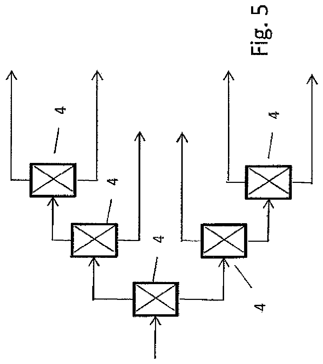

Die optische Schalteinheit 4 kann ein optischer Schalter oder eine optische Schaltweiche sein. Die optische Schalteinheit weist wenigstens einen Eingang und zumindest zwei Ausgänge auf. Die optische Schalteinheit 4 sollte dazu ausgelegt sein, die in der Laserquelle 1 erzeugte Laserleistung (optische Leistung) für die Strahlführungen 2.1, 2.2, 2.3 der HEL-Effektoren 5.1, 5.2, 5.3 aufteilen zu können. Die Aufteilung kann stufenlos oder in mehreren Stufen erfolgen. Die optische Leistung ist dabei zwischen 0 bis 100% aufteilbar. Vorgesehen ist des Weiteren, dass eine Aufteilung der optischen Leistung gleichzeitig möglich ist, sodass mehrere Strahlführungen 2.1, 2.2, 2.3 von der optischen Schalteinheit 4 mit optischer Leistung gleichzeitig versorgt werden können. Besitzt die optische Schalteinheit 4 beispielsweise nur zwei Ausgänge, kann mit Hilfe mehrerer optischer Schalteinheiten 4 eine Kaskade aufgebaut werden, über die eine Aufteilung der Laserleistung auf die Strahlführungen 2.1, 2.2, 2.3 realisiert werden kann (Fig. 5).

Der Ausgang der Laserquelle 1 ist mit einem Eingang der optischen Schalteinheit 4 optisch (15) verbunden, idealer Weise durch eine optische Faser. Ein Freilauf ist ebenfalls möglich.

Die mehreren Ausgänge der optischen Schalteinheit 4 sind auf Eingänge der Strahlführungssysteme 2.1, 2.2, 2.3 über optische Verbindungen 15 geführt. Das Schalten der optischen Schalteinheit 4 wird durch eine zusätzliche Steuerung 6 gesteuert

Die Strahlführungssysteme 2.1, 2.2, 2.3 können ihrerseits auf einer Plattform 7, 8, 9 lafettiert werden. Die Plattformen 7, 8, 9 sind ihrerseits bevorzugt beweglich, sodass die Strahlführungssysteme 2.1, 2.2, 2.3 der HEL-Effektoren 5.1, 5.2, 5.3 in Azimut und/oder Elevation verschwenkt werden können. Das ermöglich eine Richtbarkeit der HEL-Effektoren 5.1, 5.2, 5.3 auf die Bedrohung(en).

Die HEL-Effektoren 5.1, 5.2, 5.3 werden in einer ersten Ausführungsform durch die gemeinsame, zentrale Laserquelle 1, die optische Schalteinheit 4, den eigenen Strahlführungssystemen 2.1, 2.2, 2.3 sowie den optischen Verbindungen 15, idealer Weise optische Fasern, gebildet.

Mehrere HEL-Effektoren 5.1, 5.2, 5.3 können zu einem Waffensystem 100 zusammengefasst werden.

### Die Funktionsweise ist wie folgt:

Nachdem auf herkömmlicher Art und Weise eine Bedrohung oder Bedrohungen etc. detektiert wurde(n), wird durch ein Waffeneinsatzsystem, z.B. eine Feuerleitung (nicht näher dargestellt) festgelegt, welches Strahlführungssystem 2.1, 2.2, 2.3 eine gute Abwehr der Bedrohung erreichen würde. In dem Fall, dass das Strahlführungssystem 2.1 des HEL-Effektors 5.1 bestimmt wird, wird diese Information an die Steuerung 6 gegeben. Diese schaltet ihrerseits die optische Schalteinheit 4 derart, dass die optische Leistung der Laserquelle 1 über den geschalteten Ausgang der optischen Schalteinheit 4 und den Eingang des ausgewählten Strahlführungssystems 2.1 übertragen wird. Dieses Strahlführungssystem 2.1 strahlt die optische Leistung gegen die Bedrohung ab.

Hierbei kann die optische Leistung der Laserquelle 1 durch die optische Schalteinheit 4 auch gedrosselt (weniger 100%) an das Strahlführungssystem 2.1 abgegeben werden. Sollte die Feuerleitung festlegen, dass mehr als ein Strahlführungssystem 2.1, 2.2, 2.3 zur Abwehr gebraucht wird, wird die optische Leistung der Laserquelle 1 aufgeteilt und diese aufgeteilte optische Leistung auf die Eingänge der für die Abwehr bestimmten bzw. festgelegten Strahlführungssysteme 2.1, 2.2, 2.3 geleitet. Aus diesen kann dann die optische Leistung zur Abwendung der Bedrohung gegen diese abgestrahlt werden. Dabei können die Strahlführungssysteme 2.1, 2.2, 2.3 eine Bedrohung zusammen, wie auch auf unterschiedliche Bedrohungen getrennt, gerichtet werden.

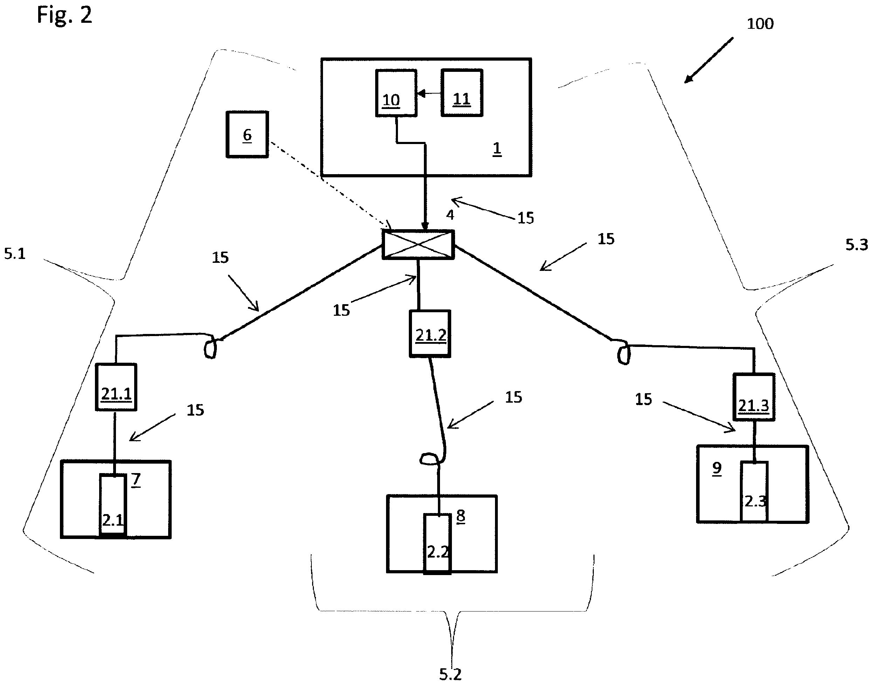

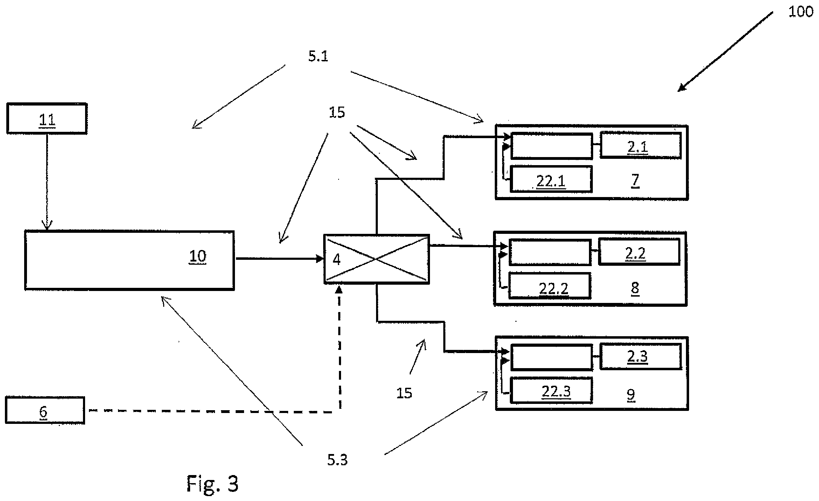

Fig. 2 und Fig. 3 zeigen eine Variante der Lösung gemäß der Fig. 1 als zweites Ausführungsbeispiel. Im Unterschied zur Lösung nach Fig. 1 wird in dem zweiten Ausführungsbeispiel der MOPP 12 bzw. der Oszillator 13 aus der Laserquelle 1 herausgelöst. Geschaffen wird eine zentrale Pumpquelle 10, die für alle HEL-Effektoren 5.1, 5.2, 5.3 die benötigte Pumpleistung erzeugt.

Gemäß Fig. 2 werden anstelle eines zentralen Oszillators 13 mehrere Oszillatoren 21.1, 21.2, 21.3 für die HEL-Effektoren 5.1, 5.2, 5.3 vorgesehen. Ein Ausgang des jeweiligen Oszillators 21.1, 21.2, 21.3 ist auf das zugehörige Strahlführungssystem 2.1, 2.2, 2.3 geführt. Über die optische Schalteinheit 4 erfolgt die Versorgung der Oszillatoren 21.1, 21.2, 21.3 mit Pumpleistung der Pumpquelle 10. Das Schalten der optischen Schalteinheit 4 erfolgt, wie zur Fig. 1 beschrieben.

Auch der MOPP 12 kann in mehrere MOPA 22.1, 22.2, 22.3 aufgeteilt werden (Fig. 3). Diese MOPP 22.1, 22.2, 22.3 können in der Nähe der Plattformen 7, 8, 9 angeordnet werden. Ein Ausgang des Verstärkers der MOPP 22.1, 22.2, 22.3 ist auf das zugehörige Strahlführungssystem 2.1, 2.2, 2.3 ausgerichtet. Über die optische Schalteinheit 4 erfolgt die Versorgung der Verstärker der MOPA 22.1, 22.2, 22.3 mit Pumpleistung der Pumpquelle 10. Die Funktionsweise und das Schalten der optischen Schalteinheit 4 erfolgt, wie zur Fig. 1 beschrieben.

Die HEL-Effektoren 5.1, 5.2, 5.3 werden in diesen Ausführungen von einer gemeinsamen Pumpquelle 10 (zuzüglich Energieversorgungs- und Kühleinrichtung 11), der optischen Schalteinheit 4, den Oszillatoren 21.1, 21.2, 21.3 bzw. MOPA 22.1, 22.2, 22.3 und den eigenen Strahlführungen 2.1, 2.2, 2.3 sowie den optischen Verbindungen 15, idealer Weise optische Fasern, gebildet.

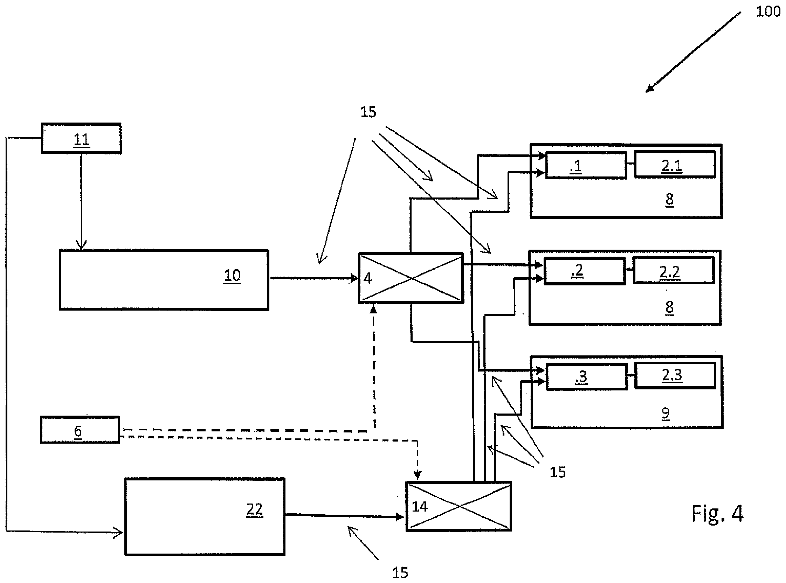

Fig. 4 zeigt eine weitere Lösungsvariante der erfinderischen Idee, ausgehend von Fig. 3. Das Ausführungsbeispiel nach Fig. 3 zeigt die Variante, wonach der gesamte MOPA 22.2, 22.3 getrennt von der Pumpquelle 10 in der Nähe der Pumpquelle 10 oder der Strahlführungssysteme 2.1, 2.2, 2.3 angebracht werden kann.

Entsprechend Fig. 4 liegt nun ein weiterer Schritt der Umsetzung der Idee darin, diese MOPA 22.1, 22.2, 22.3 derart auszuführen, dass ein gemeinsamer Master Oszillator (MO) 22 für die verbleibenden Verstärker .1, .2, .3 geschaffen und von diesen genutzt werden kann. Das minimiert insbesondere das zu lafettierende Gewicht, da nur noch der jeweilige Verstärker .1, .2, .3 lafettiert werden müsste.

Für diese Ausführungsform wird eine weitere optische Schalteinheit 14 eingesetzt, die, wie die optische Schalteinheit 4 für die Pumpleistung, den zentralen Master Oszillator 22 mit den einzelnen Verstärkern .1, .2, .3 auch zeitgleich verbinden kann. Diese optische Schalteinheit 14 sollte die gleichen Anforderungen wie die optische Schalteinheit 4 erfüllen können. Die optische Schalteinheit 14 befindet sich dazu zwischen dem Ausgang des Master Oszillators 22 und einem Eingang der Verstärker .1, .2, .3 und schaltet den Ausgang des Master Oszillators 22 auf den jeweiligen Eingang der Verstärker .1, .2, .3. Ein weiterer Eingang der Verstärker .1, .2, .3 ist der Einspeisung der Pumpleistung der Pumpquelle 10 vorbehalten.

Die HEL-Effektoren 5.1, 5.2, 5.3 werden in dieser vierten Ausführung durch eine zentrale Pumpquelle 10, einen zentralen Master Oszillator (MO) 22, den individuellen, eigenen Verstärkern) .1, .2, .3, die auf das eigene Strahlführungssystem 2.1, 2.2, 2.3 ausgerichtet sind, sowie den optischen Verbindungen 15, idealer Weise optische Fasern, geschaffen.

Es versteht sich, dass im Rahmen der erfinderischen Idee auch mehr als ein Waffensystem 100 auf dem Objekt angebracht werden, z.B. ein backbordseitiges Waffensystem oder ein steuerbordseitiges Waffensystem etc.

## Patentansprüche

1. Waffensystem (100) mit wenigstens zwei High-Energy-Laser, (HEL),-Effektoren (5.1, 5.2, 5.3), die jeweils wenigstens ein Strahlführungssystem (2.1, 2.2, 2.3) aufweisen, wobei die wenigstens zwei HEL-Effektoren (5.1, 5.2, 5.3) zumindest eine gemeinsam nutzbare Pumpquelle (10) umfassen, wobei wenigstens eine optische Schalteinheit vorgesehen ist, wobei die wenigstens eine optische Schalteinheit (4, 14) derart ausgeführt ist, dass das jeweils wenigstens eine Strahlführungssystem (2.1, 2.2, 2.3) mit der zumindest einen gemeinsam nutzbaren Pumpquelle (10) durch die wenigstens eine optische Schalteinheit (4, 14) verbindbar ist, **dadurch gekennzeichnet, dass** entweder a) ein von den wenigstens zwei HEL-Effektoren (5.1, 5.2, 5.3) getrennt von der Pumpquelle (10) angeordneter, gemeinsam genutzter Master Oszillator (22) vorgesehen ist, wobei ein jeweiliger HEL-Effektor (5.1, 5.2, 5.3) einen Verstärker (.1, .2, .3) umfasst, und die wenigstens eine optische Schalteinheit (4) zwischen einem Ausgang der zumindest einen gemeinsam nutzbaren Pumpquelle(n) (10) und einem Eingang des jeweiligen Verstärkers (.1, .2, .3) des jeweiligen HEL-Effektors (5.1, 5.2, 5.3) angeordnet ist,
oder
b) dass ein jeweiliger HEL-Effektor (5.1, 5.2, 5.3) einen Master Oscillator and Power Amplifier (MOPA) (21.1, 21.2, 21.3) umfasst, und die wenigstens eine optische Schalteinheit (4) zwischen einem Ausgang der zumindest einen gemeinsam nutzbaren Pumpquelle(n) (10) und einem Eingang eines jeweiligen Verstärkers des jeweiligen MOPA (21.1, 21.2, 21.3) des jeweiligen HEL-Effektors (5.1, 5.2, 5.3) angeordnet ist.

2. Waffensystem (100) nach Anspruch 1, **dadurch gekennzeichnet, dass** der wenigstens eine Master Oszillator (22) über wenigstens eine zwischen einem Ausgang des Master Oszillators (22) und einem weiteren Eingang des Verstärkers (.1, .2, .3) des jeweiligen HEL-Effektors (5.1, 5.2, 5.3) eingebrachte weitere optische Schalteinheit (14) zur Schaffung der HEL-Effektoren (5.1, 5.2, 5.3) verschaltbar ist.

3. Waffensystem (100) nach einem Ansprüche 1 oder 2, **gekennzeichnet durch** eine Steuerung (6).

4. Waffensystem (100) nach einem der Ansprüche 1 bis 3, **dadurch gekennzeichnet, dass** die wenigstens eine optische Schalteinheit (4, 14) derart ausgeführt ist, dass das Laserlicht auf mindestens zwei Ausgänge der optischen Schalteinheit (4, 14) aufteilbar ist, insbesondere auch gleichzeitig.

5. Waffensystem (100) nach einem der Ansprüche 1 bis 4, **dadurch gekennzeichnet, dass** die wenigstens eine optische Schalteinheit (4,14) ein optischer Schalter oder eine optische Schaltweiche ist.

6. Waffensystem (100) nach einem der Ansprüche 1 bis 5, **dadurch gekennzeichnet, dass** durch die optische Schalteinheit (4, 14) die Strahlleistung der zumindest einen gemeinsam nutzbaren Pumpquelle(n) (10) der HEL-Effektoren (5.1, 5.2, 5.3) einstellbar und/oder variierbar ist.

7. Waffensystem (100) nach Anspruch 6, **dadurch gekennzeichnet, dass** die Strahlleistung zwischen 0% bis 100% aufteilbar ist.

8. Waffensystem (100) nach Anspruch 6 oder 7, **dadurch gekennzeichnet, dass** eine stufenlose oder mehrstufige Aufteilung der Strahlleistung der zumindest einen gemeinsam nutzbaren Pumpquelle (10) erfolgen kann.

9. Waffensystem (100) nach einem der Ansprüche 1 bis 8, **dadurch gekennzeichnet, dass** die HEL-Effektoren über die wenigstens eine optische Schalteinheit (4, 14) in einen Sicherheitszustand überführbar sind.

10. Objekt mit einem Waffensystem (100) nach einem der Ansprüche 1 bis 9, **dadurch gekennzeichnet, dass** die Pumpquelle (10) und/oderder Master Oszillator (22) zentral und/oder dezentral, bezogen auf die Strahlführungen (2.1, 2.2, 2.3) auf bzw. im Objekt, angeordnet sind.

11. Objekt nach Anspruch 10, **dadurch gekennzeichnet, dass** das jeweils wenigstens eine Strahlführungssystem (2.1, 2.2, 2.3) der wenigstens zwei HEL-Effektoren auf Plattformen (7, 8, 9) lafettiert ist.

12. Objekt nach Anspruch 10 oder 11, **dadurch gekennzeichnet, dass** die Objekte stationärer Art, wie Häuser, Bunker, Container oder beweglicher Art, wie Fahrzeuge zu Land, Luft und See, Container, sind.

## Claims

1. Weapon system (100) comprising at least two high-energy laser (HEL) effectors (5.1, 5.2, 5.3), each having at least one beam guide system (2.1, 2.2, 2.3), the at least two HEL effectors (5.1, 5.2, 5.3) comprising at least one jointly usable pump source (10), at least one optical switching unit being provided, the at least one optical switching unit (4, 14) being designed such that the at least one beam guide system (2.1, 2.2, 2.3) can be connected to the at least one jointly usable pump source (10) via the at least one optical switching unit (4, 14), **characterized in that** either
a) a jointly used master oscillator (22) which is arranged by the at least two HEL effectors (5.1, 5.2, 5.3) separately from the pump source (10) is provided, a particular HEL effector (5.1, 5.2, 5.3) comprising an amplifier (.1, .2, .3), and the at least one optical switching unit (4) being arranged between an output of the at least one jointly usable pump source (10) and an input of the particular amplifier (.1, .2, .3) of the particular HEL effector (5.1, 5.2, 5.3),
or
b) a particular HEL effector (5.1, 5.2, 5.3) comprises a master oscillator and power amplifier (MOPA) (21.1, 21.2, 21.3), and the at least one optical switching unit (4) is arranged between an output of the at least one jointly usable pump source (10) and an input of a particular amplifier of the particular MOPA (21.1, 21.2, 21.3) of the particular HEL effector (5.1, 5.2, 5.3) .

2. Weapon system (100) according to claim 1, **characterized in that** the at least one master oscillator (22) can be connected via at least one further optical switching unit (14), introduced between an output of the master oscillator (22) and a further input of the amplifier (.1, .2, .3) of the particular HEL effector (5.1, 5.2, 5.3), for creating the HEL effectors (5.1, 5.2, 5.3).

3. Weapon system (100) according to one of claims 1 or 2, **characterized by** a controller (6).

4. Weapon system (100) according to any of claims 1 to 3, **characterized in that** the at least one optical switching unit (4, 14) is designed such that the laser light can be divided into at least two outputs of the optical switching unit (4, 14), in particular also simultaneously.

5. Weapon system (100) according to any of claims 1 to 4, **characterized in that** the at least one optical switching unit (4, 14) is an optical switch or an optical switching device.

6. Weapon system (100) according to any of claims 1 to 5, **characterized in that** the beam power of the at least one jointly usable pump source (10) of the HEL effectors (5.1, 5.2, 5.3) is adjustable and/or variable by the optical switching unit (4, 14).

7. Weapon system (100) according to claim 6, **characterized in that** the beam power can be divided between 0% and 100%.

8. Weapon system (100) according to claim 6 or claim 7, **characterized in that** continuous or multi-stage division of the beam power of the at least one jointly usable pump source (10) can take place.

9. Weapon system (100) according to any of claims 1 to 8, **characterized in that** the HEL effectors can be transferred to a safety state via the at least one optical switching unit (4, 14).

10. Object having a weapon system (100) according to any of claims 1 to 9, **characterized in that** the pump source(s) (10) and/or the master oscillator (22) are arranged centrally and/or decentrally, in relation to the beam guides (2.1, 2.2, 2.3) on or in the object.

11. Object according to claim 10, **characterized in that** the at least one beam guide system (2.1, 2.2, 2.3) of the at least two HEL effectors is mounted on platforms (7, 8, 9) .

12. Object according to claim 10 or claim 11, **characterized in that** the objects are of a stationary type, such as houses, bunkers or containers, or of a movable type, such as vehicles for land, air and sea or containers.

## Revendications

1. Système d'arme (100) avec au moins deux effecteurs laser à haute énergie (HEL) (5.1, 5.2, 5.3) qui comprennent chacun au moins un système de guidage de faisceau (2.1, 2.2, 2.3), dans lequel lesdits au moins deux effecteurs HEL ( 5.1, 5.2, 5.3) comprennent au moins une source de pompage (10) utilisable ensemble, dans lequel au moins une unité de commutation optique est prévue, dans lequel ladite au moins une unité de commutation optique (4, 14) est conçue de telle sorte que ledit au moins un système de guidage de faisceau (2.1, 2.2, 2.3) respectif peut être connecté à ladite au moins une source de pompage (10) utilisable ensemble, par l'intermédiaire de ladite au moins une unité de commutation optique (4, 14), **caractérisé par le fait que** soit
a) on prévoit un oscillateur maître (22) qui est utilisé ensemble par lesdits au moins deux effecteurs HEL (5.1, 5.2, 5.3) et est disposé séparément de la source de pompage (10), dans lequel un effecteur HEL (5.1, 5.2, 5.3) respectif présente un amplificateur (.1, .2, .3), et ladite au moins une unité de commutation optique (4) est agencée entre une sortie de ladite au moins une source de pompage (10) utilisable ensemble et une entrée de l'amplificateur (.1, .2, .3) respectif de l'effecteur HEL (5.1, 5.2, 5.3) respectif,
soit
b) qu'un effecteur HEL (5.1, 5.2, 5.3) respectif comprend un oscillateur maître et un amplificateur de puissance (MOPA) (21.1, 21.2, 21.3), et ladite au moins une unité de commutation optique (4) est agencée entre une sortie de ladite au moins une source de pompage (10) utilisable ensemble et une entrée d'un amplificateur respectif du MOPA (21.1, 21.2, 21.3) respectif de l'effecteur HEL (5.1, 5.2, 5.3) respectif.

2. Système d'arme (100) selon la revendication 1, **caractérisé par le fait que** ledit au moins un oscillateur maître (22) peut être connecté par au moins une autre unité de commutation optique (14) pour créer les effecteurs HEL (5.1, 5.2, 5.3), qui est insérée entre une sortie de l'oscillateur maître (22) et une autre entrée de l'amplificateur (.1, .2, .3) de l'effecteur HEL (5.1, 5.2, 5.3) respectif.

3. Système d'arme (100) selon l'une quelconque des revendications 1 ou 2, **caractérisé par** une commande (6) .

4. Système d'arme (100) selon l'une quelconque des revendications 1 à 3, **caractérisé par le fait que** ladite au moins une unité de commutation optique (4, 14) est conçue de telle manière que la lumière laser peut être divisée entre au moins deux sorties de l'unité de commutation optique (4, 14), en particulier également en même temps.

5. Système d'arme (100) selon l'une quelconque des revendications 1 à 4, **caractérisé par le fait que** ladite au moins une unité de commutation optique (4, 14) est un commutateur optique ou une aiguille de commutation optique.

6. Système d'arme (100) selon l'une quelconque des revendications 1 à 5, **caractérisé par le fait que** la puissance de faisceau de ladite au moins une source de pompage (10) utilisable ensemble des effecteurs HEL. (5.1, 5.2, 5.3) est réglable et/ou variable par l'unité de commutation optique (4, 14).

7. Système d'arme (100) selon la revendication 6, **caractérisé par le fait que** la puissance de faisceau peut être divisée entre 0 % et 100 %.

8. Système d'arme (100) selon la revendication 6 ou 7, **caractérisé par le fait que** la puissance de faisceau de ladite au moins une source de pompage (10) utilisable ensemble peut être divisée en continu ou en plusieurs étapes.

9. Système d'arme (100) selon l'une quelconque des revendications 1 à 8, **caractérisé par le fait que** l'on peut faire passer les effecteurs HEL dans un état de sécurité par ladite au moins une unité de commutation optique (4, 14).

10. Objet comprenant un système d'arme (100) selon l'une quelconque des revendications 1 à 9, **caractérisé par le fait que** la ou les source(s) de pompage (10) et/ou l'oscillateur maître (22) sont disposés de manière centralisée et/ou décentralisée par rapport aux guides de faisceau (2.1, 2.2, 2.3) sur ou bien dans l'objet.

11. Objet selon la revendication 10, **caractérisé par le fait que** ledit au moins un système de guidage de faisceau (2.1, 2.2, 2.3) respectif desdits au moins deux effecteurs HEL est monté sur des plateformes (7, 8, 9) .

12. Objet selon la revendication 10 ou 11, **caractérisé par le fait que** les objets sont de type stationnaire, tels que maisons, abris, conteneurs, ou de type mobile, tels que véhicules terrestres, aériens et maritimes, conteneurs.
